# NOUVEAU FASCICULE DE BREVET EUROPEEN

(11) **EP 2 304 363 B2**
(45) Date de publication et mention de la décision concernant l'opposition: **03.11.2021**
(45) Mention de la délivrance du brevet: 23.05.2012
(21) Numéro de dépôt: 09802551.3
(22) Date de dépôt: 17.07.2009
(51) Int. Cl.: F27B 7/20, B01D 53/62, C04B 7/36, C04B 7/43, F27B 17/00, C21C 5/28, C21C 5/52

(54) **PROCÉDÉ DE FABRICATION DE CLINKER DE CIMENT DANS UNE INSTALLATION, ET INSTALLATION DE FABRICATION DE CLINKER DE CIMENT EN TANT QUE TELLE**
VERFAHREN ZUR HERSTELLUNG VON ZEMENTKLINKERN IN EINEM WERK UND WERK ZUR HERSTELLUNG VON ZEMENTKLINKERN
PROCESS FOR MANUFACTURING CEMENT CLINKER IN A PLANT, AND CEMENT CLINKER MANUFACTURING PLANT AS SUCH

(30) Priorité: 01.08.2008 FR 0804406
(43) Date de publication de la demande: 06.04.2011
(73) Titulaire: Fives FCB, 59650 Villeneuve d'Ascq (FR)
(72) Inventeur: CORDONNIER, Alain, F-59650 Villeneuve d'Ascq (FR); DEVROE, Sébastien, F-59777 Lille (FR)
(74) Mandataire: Boubal, Denis Henri Jacques
(86) Numéro de dépôt international: PCT/FR2009/000883
(87) Numéro de publication internationale: WO 2010/012880

(56) Documents cités:
- EP-A- 1 923 367
- JP-A- 9 110 485
- US-A1- 2007 248 925

## Description

L'invention concerne un procédé de fabrication de clinker de ciment dans une installation, ainsi qu'une installation de fabrication de clinker de ciment en tant que telle.

La fabrication de ciment utilise pour sa plus grande part une matière cuite, le clinker, qui est produite à partir de minéraux dont le constituant essentiel est le carbonate de calcium. L'élaboration du clinker passe par une opération de cuisson qui produit de grandes quantités de dioxyde de carbone, tant par la décomposition du carbonate de calcium que par la combustion du combustible nécessaire à l'opération.

Par exemple, la production d'une tonne de ciment dit Portland s'accompagne ainsi de l'émission d'environ 530 kg de CO2 venant de la matière traitée et de 250 à 300 kg de CO2 venant du combustible. Ce dioxyde de carbone est émis dans les fumées, à une concentration inférieure à 30 %, le composant principal des fumées étant de l'azote. Dans ces conditions, il est difficile à isoler, notamment à séquestrer dans le but de limiter les rejets de CO2 dans l'atmosphère.

La fabrication de clinker de ciment utilise le plus souvent un procédé de cuisson dit en voie sèche, où les matières premières préalablement broyées, sont calcinées dans un four rotatif. Afin de diminuer les besoins énergétiques de l'opération, des échangeurs ont été ajoutés en amont et en aval du four rotatif, et récupèrent directement la chaleur contenue dans les matières et les fumées sortant du four.

En amont, c'est un préchauffeur à cyclones où la matière crue est préchauffée en suspension, et partiellement décarbonatée. En aval, c'est un refroidisseur de clinker où la matière cuite est refroidie par le soufflage d'air froid. La plupart des installations fonctionnant en voie dite sèche comportent un réacteur de combustion en bas du préchauffeur, appelé précalcinateur, dans lequel est apportée une part importante du combustible consommé par l'unité de cuisson, et dans lequel le carbonate de calcium contenu dans la matière en suspension réalise une majeure partie de sa réaction de décarbonatation.

On connaît toutefois du document EP-1.923.367 une installation pour la fabrication de clinker de ciment qui comprend un préchauffeur à cyclones, un réacteur de précalcination, un four rotatif et un refroidisseur à clinker.

Lés fumées produites par le réacteur de précalcination sont traitées séparément des fumées produites par le four rotatif et le préchauffeur à cyclones.

Selon ce document, on alimente le réacteur de précalcination avec un gaz riche en oxygène, pauvre en azote afin de concentrer le CO2 et en faciliter la séquestration. Le CO2 s'évacuant du réacteur de précalcination peut être piégé. Les fumées produites par le four et le préchauffeur à cyclones ne sont pas concentrées en CO2, et sont évacués librement dans l'atmosphère.

L'objet de la présente invention vise à pallier les inconvénients précités en proposant un procédé de fabrication de clinker de ciment économiquement viable permettant de limiter les rejets de dioxyde de carbone dans l'atmosphère.

Un autre but de l'invention est de proposer un tel procédé qui peut être mis en oeuvre dans une installation techniquement proche de celle utilisée habituellement pour la production de clinker de ciment.

Un autre but de l'invention est de proposer une telle installation en tant que telle.

D'autres buts et avantages de la présente invention apparaîtront au cours de la description qui va suivre qui n'est donnée qu'à titre indicatif et qui n'a pas pour but de la limiter.

L'invention concerne, tout d'abord, selon un premier aspect, un procédé de fabrication de clinker de ciment dans une installation comprenant :
- un préchauffeur à cyclones, destiné à préchauffer la matière crue,
- un réacteur de précalcination muni d'un ou plusieurs brûleurs, qui apportent de la chaleur au préchauffeur à cyclones,
- un four rotatif, muni d'un brûleur alimenté en combustible, les fumées dudit four étant conduites vers le réacteur de précalcination et/ou le préchauffeur à cyclones,
- un refroidisseur à clinker par soufflage d'un gaz de refroidissement, au niveau de la sortie dudit four rotatif engendrant du gaz chaud, procédé dans lequel :
   - on préchauffe les matières crues et on les décarbonate dans ledit préchauffeur à cyclones, et/ou ledit réacteur de précalcination,
   - on refroidit le clinker sortant dudit four dans ledit refroidisseur à clinker,
   - on alimente le réacteur de précalcination avec un gaz riche en oxygène dont la teneur en azote est inférieure à 30 %, constituant la seule source d'oxygène dudit réacteur,
   - on recycle une partie des gaz sortant dudit préchauffeur à cyclones dans l'installation vers la réaction de précalcination, voire le préchauffeur à cyclones de manière à obtenir un flux adéquat nécessaire à la suspension des matières dans ledit préchauffeur, tandis que l'autre partie, riche en dioxyde de carbone, est adaptée en vue d'un traitement permettant de limiter les rejets en dioxyde de carbone dans l'atmosphère, tel que notamment la séquestration,
et dans lequel on recycle la partie sortant dudit prechauffeur à cyclones et on la réchauffe grâce à une partie du gaz chaud engendré par le refroidisseur à clinker avant de la diriger directement vers le réacteur de précalcination, voire le préchauffeur à cyclones,
et dans lequel le gaz de refroidissement du refroidisseur à clinker (5) est de l'air et on divise l'air chaud engendré par le refroidisseur à clinker (5) en trois flux :
• - on dirige une partie de l'air chaud produit dans le refroidisseur, dite flux secondaire, vers le four rotatif pour être utilisée comme air de combustion dans le four,
• - on conduit, une seconde partie de gaz chauds produits dans le refroidisseur à clinker, dite flux tertiaire, séparément de la première partie, définie par une température au moins égale à 750 °C, jusqu'à un échangeur de manière à réchauffer la partie des gaz recyclés.
• - on extrait une troisième partie, de température inférieure à la température du flux tertiaire.

L'invention concerne également, selon un second aspect, une installation de fabrication de clinker de ciment permettant notamment la mise en œuvre du procédé, comprenant :
- un préchauffeur à cyclones, destiné à préchauffer la matière crue,
- un réacteur de précalcination muni d'un ou plusieurs brûleurs, qui apporte de la chaleur au préchauffeur à cyclones,
- un four rotatif, muni d'un brûleur alimenté en combustible, les fumées dudit four étant conduites vers le réacteur de précalcination, voire ledit préchauffeur,
- un refroidisseur à clinker par soufflage d'un gaz de refroidissement, au niveau de la sortie dudit four rotatif, engendrant du gaz chaud,
- une source d'un gaz riche en oxygène dont la teneur en azote est inférieure à 30 %, alimentant le réacteur de précalcination,
- une conduite pour le recyclage d'une partie des gaz sortant dudit préchauffeur à cyclones dans l'installation, vers le réacteur de précalcination, voire le préchauffeur à cyclones,
et dans laquelle au moins un échangeur coopère avec une partie de l'air chaud engendré par le refroidisseur à clinker pour réchauffer la partie des gaz recyclés, la conduite de recyclage alimentant directement le réacteur de précalcination, voire le préchauffeur à cyclones.

L'invention concerne encore, selon un troisième aspect, un procédé de fabrication de clinker de ciment dans une installation comprenant :
- un préchauffeur à cyclones destiné à préchauffer la matière crue,
- un réacteur de précalcination, muni d'un ou plusieurs brûleurs, qui apporte de la chaleur au préchauffeur à cyclones,
- un four rotatif, muni d'un brûleur alimenté en combustible, les fumées dudit four étant conduites vers le réacteur de précalcination, et/ou le préchauffeur à cyclones,
- un refroidisseur à clinker par soufflage d'un gaz de refroidissement, au niveau de la sortie dudit four rotatif, engendrant du gaz chaud,
procédé dans lequel :
- on préchauffe les matières crues et on les décarbonate dans ledit préchauffeur à cyclones, et/ou ledit réacteur de précalcination,
- on refroidit le clinker sortant du four dans ledit refroidisseur à clinker,
- on alimente le réacteur de précalcination avec un gaz riche en oxygène dont la teneur en azote est inférieure à 30%, constituant la seule source d'oxygène dudit réacteur,
- on alimente le brûleur du four rotatif avec un gaz riche en oxygène dont la teneur en azote est inférieure à 30%, constituant la seule source d'oxygène du four
- on recycle une partie des gaz sortant dudit préchauffeur à cyclones dans l'installation vers le refroidisseur à clinker, et on la refroidit grâce à au moins un échangeur et on la dirige pour servir de gaz de refroidissement vers ledit refroidisseur à clinker de manière à obtenir un flux adéquat nécessaire à la suspension des matières dans ledit préchauffeur, tandis que l'autre partie, riche en dioxyde de carbone est adaptée en vue d'un traitement permettant de limiter les rejets en dioxyde de carbone dans l'atmosphère, tel que notamment la séquestration et dans lequel on recycle une partie excédentaire du gaz chaud produit par le refroidisseur à clinker, que l'on refroidit grâce à un échangeur pour alimenter ledit refroidisseur à clinker en gaz de refroidissement.

L'invention concerne encore, selon un quatrième aspect, une installation pour la fabrication de clinker de ciment comprenant :
- un préchauffeur à cyclones destiné à préchauffer la matière crue,
- un réacteur de précalcination, muni d'un ou plusieurs brûleurs qui apporte de la chaleur au préchauffeur à cyclones,
- un four rotatif, muni d'un brûleur alimenté en combustible, les fumées dudit four étant conduites vers le réacteur de précalcination, voire ledit préchauffeur,
- un refroidisseur à clinker par soufflage d'un gaz de refroidissement, au niveau de la sortie dudit four rotatif, engendrant du gaz chaud,
- une source d'un gaz riche en oxygène dont la teneur en azote est inférieure à 30%, alimentant le réacteur de précalcination,
- une source d'un gaz riche en oxygène, dont la teneur en azote inférieure à 30% alimente le brûleur du four rotatif,
- une conduite pour le recyclage d'une partie des gaz sortant dudit préchauffeur à cyclones dans l'installation vers ledit refroidisseur à clinker et dans laquelle au moins un échangeur coopère avec la partie des gaz recyclés pour la refroidir, ladite conduite de recyclage alimentant en gaz de refroidissement ledit refroidisseur à clinker et dans laquelle un échangeur permet de refroidir une partie du gaz chaud engendré par le refroidisseur à clinker afin d'alimenter ledit refroidisseur à clinker en gaz de refroidissement.

L'invention sera mieux comprise à la lecture de la description suivante accompagnant les dessins en annexe parmi lesquels :
- la figure 1 illustre schématiquement un exemple du procédé de fabrication et l'installation associée, conformes à l'invention selon un premier mode de réalisation,
- la figure 2 illustre un procédé de fabrication de clinker de ciment et l'installation associée, conformes à l'invention selon un deuxième mode de réalisation,
- la figure 3 illustre un procédé de fabrication de clinker de ciment et l'installation associée, conformes à l'invention selon un troisième mode de réalisation.

Aussi, l'invention concerne un procédé de fabrication de clinker de ciment dans une installation.

Cette installation comprend :
- un préchauffeur à cyclones 3 destiné à préchauffer la matière crue 2,
- un réacteur de précalcination 4, muni d'un ou plusieurs brûleurs, qui apporte de la chaleur (gaz chauds) au préchauffeur à cyclones 3,
- un four rotatif 1, muni d'un brûleur alimenté en combustible, les fumées du four 1 étant conduites vers le réacteur de précalcination 4 et/ou le préchauffeur à cyclones 3,
- un refroidisseur à clinker 5 par soufflage d'un gaz de refroidissement, au niveau de la sortie dudit four rotatif 1, engendrant du gaz chaud.

Il s'agit donc d'une installation comprenant un préchauffeur à cyclones, un réacteur de précalcination, un four rotatif et un refroidisseur à clinker, d'une manière équivalente aux installations de l'art antérieur.

Selon le procédé de l'invention :
- on préchauffe les matières crues et on les décarbonate dans ledit préchauffeur à cyclones 3, et/ou ledit réacteur de précalcination 4,
- on refroidit le clinker sortant du four 1 dans ledit refroidisseur à clinker 5.

Selon l'invention :
- on alimente le réacteur de précalcination 4 avec un gaz 9 riche en oxygène dont la teneur en azote est inférieure à 30 %, constituant la seule source d'oxygène dudit réacteur 4,
- on recycle une partie 8ₐ des gaz 8 sortant dudit préchauffeur à cyclones 3, dans l'installation, de manière à obtenir un flux adéquat nécessaire à la suspension des matières dans ledit préchauffeur 3, tandis que l'autre partie 8_{b}, riche en dioxyde de carbone, est adaptée en vue d'un traitement permettant de limiter les rejets en dioxyde de carbone dans l'atmosphère tel que notamment la séquestration.

L'invention consiste à utiliser à la place de l'air pour la combustion au niveau du réacteur de précalcination 4, de l'oxygène pur ou au moins un gaz oxygéné dont la teneur en azote est fortement réduite par rapport à celle de l'air.

La quantité de fumées générées est ainsi plus faible qu'habituellement et insuffisante pour maintenir la matière en suspension et assurer ainsi le fonctionnement aéraulique normal du préchauffeur à cyclones.

Selon l'invention, on rétablit ce déséquilibre en recyclant une quantité suffisante de fumées sortant du préchauffeur pour maintenir un flux de gaz adéquat. Les gaz produits sont ainsi enrichis en dioxyde de carbone, appauvris en azote, et ainsi adaptés en vue d'un traitement permettant de limiter les rejets de dioxyde de carbone dans l'atmosphère tel que notamment la séquestration.

Plus précisément, selon un mode de réalisation, on recycle la partie 8ₐ des gaz sortant dudit préchauffeur à cyclones 3 de manière à assurer un rapport de débit massique entre la matière traitée et les fumées compris entre 0,5 kg/kg et 2 kg/kg.

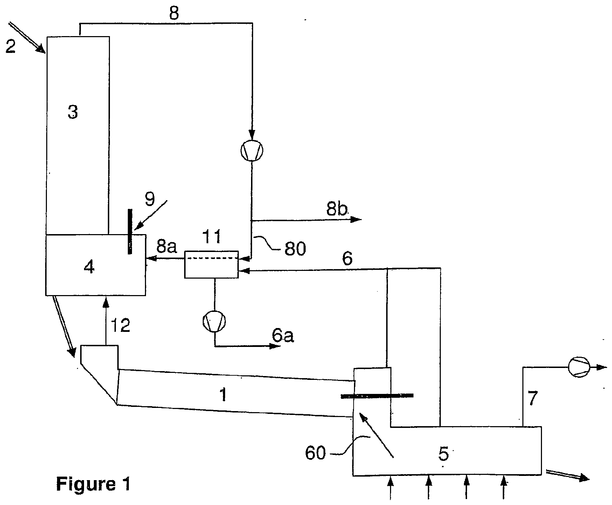

Selon un mode de réalisation du procédé, particulièrement illustré selon l'exemple de la figure 1, on recycle la partie 8ₐ des gaz 8 sortant du préchauffeur à cyclone 3 et on la réchauffe avant de la diriger directement vers le réacteur de précalcination 4, voire le préchauffeur à cyclones 3. Par exemple, on réchauffe la partie 8ₐ des gaz recyclés grâce à une partie 6 du gaz chaud engendré par le refroidisseur à clinker 5.

Nous décrivons maintenant plus particulièrement l'exemple de la figure 1.

Dans cet exemple, le gaz de refroidissement du refroidisseur à clinker 5 est de l'air et contient ainsi une part importante d'azote.

L'air chaud engendré par le refroidisseur à clinker 5 est divisé en trois flux. Une partie 60 de l'air chaud produit dans le refroidisseur, dite flux secondaire, est dirigée vers le four rotatif 1 pour être utilisée comme air de combustion dans le four.

Une seconde partie 6 de gaz chauds produits dans le refroidisseur à clinker, dite flux tertiaire, définie par une température au moins égale à 750 °C, est conduite séparément de la première partie 60 jusqu'à l'échangeur 11 de manière à réchauffer la partie 8ₐ des gaz recyclés.

Enfin, une troisième partie 7, de température inférieure à la température du flux tertiaire, est extraite et peut être utilisée pour la production d'énergie mécanique, voire d'électricité.

Eventuellement, la chaleur résiduelle contenue dans le flux tertiaire 6ₐ, en aval de l'échangeur 11, peut être utilisée pour la production d'énergie, notamment d'électricité. Eventuellement, on utilise également la chaleur résiduelle contenue dans la partie 8_{b} non recyclée des fumées du préchauffeur 3 pour la production d'énergie

Il est à noter que, dans cet exemple, la partie 8ₐ recyclée est dirigée directement vers ledit réacteur de précalcination 4, voire le préchauffeur à cyclones 3. Lorsque les gaz sont dirigés vers le réacteur de précalcination 4, le gaz de combustion dans le réacteur 4 est un mélange du gaz 9, riche en oxygène, et de la partie recyclée 8ₐ, riche en dioxyde de carbone. Avantageusement, on évite ainsi que le gaz de combustion ne soit trop concentré en oxygène, et ainsi la création d'une flamme trop vive dans le réacteur 4 susceptible de le détériorer.

Eventuellement, la partie 8_{b} de gaz riche en dioxyde de carbone, non directement recyclé, peut être utilisée au moins partiellement comme fluide de transport pneumatique pour les combustibles solides et/ou de pulvérisation pour les combustibles liquides et/ou comme fluide de nettoyage pneumatique du préchauffeur à cyclones et/ou du refroidisseur à clinker.

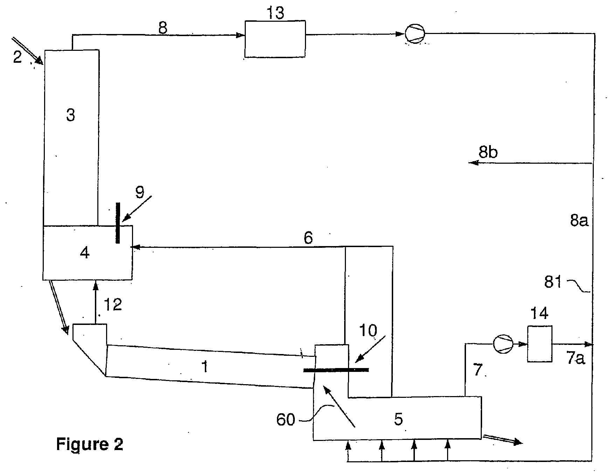

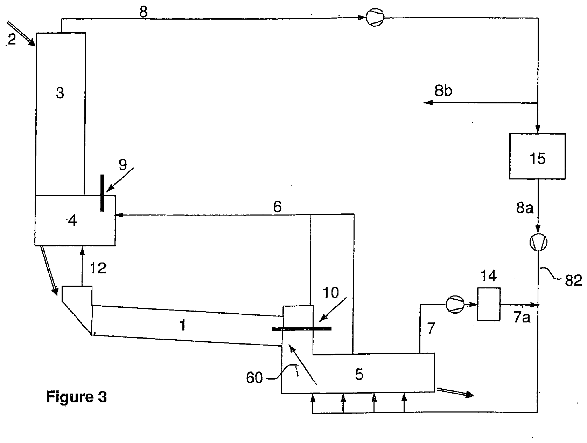

Selon un autre mode de réalisation, illustré notamment à la figure 2 ou 3 :
- on alimente le brûleur du four rotatif 1 avec un gaz 10, riche en oxygène dont la teneur en azote est inférieure à 30 %, constituant la seule source d'oxygène du four,
- on recycle la partie 8ₐ des gaz sortant du préchauffeur et on la refroidit grâce à un échangeur 13 ; 15 et on la dirige pour servir de gaz de refroidissement vers ledit refroidisseur à clinker.

Nous décrivons maintenant plus en détail le procédé conforme à l'invention selon l'exemple de la figure 2

Dans cet exemple, le gaz de refroidissement alimentant le refroidisseur à clinker 5 est issu de gaz recyclés qui, pour la partie 8ₐ, proviennent des gaz sortant du préchauffeur 3, et pour une autre, proviennent d'une partie des gaz chauds engendrés par ledit refroidisseur à clinker 5. Le ou les brûleurs du four rotatif sont alimentés par un gaz 10, riche en oxygène dont la teneur en azote est inférieure à 30 %, constituant la seule source d'oxygène du four. Le ou les brûleurs du réacteur de précalcination 4 sont alimentés avec un gaz 9 riche en oxygène dont la teneur en azote est inférieure à 30 %, constituant la seule source d'oxygène du réacteur 4.

Aussi, le gaz de refroidissement est riche en dioxyde de carbone. Une partie 60 du gaz chaud produit dans le refroidisseur à clinker 5, dit flux secondaire, est dirigée vers le four rotatif 1. Plus précisément, cette partie 60 se mélange avec le gaz 10 riche en oxygène, limitant ainsi la concentration en oxygène du gaz de combustion afin d'éviter une flamme trop vive au brûleur du four, susceptible de détériorer ledit four.

Une seconde partie 6 du gaz chaud, également riche en dioxyde de carbone, produit dans le refroidisseur à clinker 5, dite flux tertiaire, définie par une température au moins égale à 750 °, est conduite séparément de la première partie vers le réacteur de précalcination 4. Dans ce réacteur, cette partie 6 de gaz, riche en dioxyde de carbone, se mélange avec le gaz 9 riche en oxygène, limitant ainsi la concentration en oxygène du gaz de combustion, afin d'éviter une flamme trop vive au brûleur du réacteur 4, susceptible de le détériorer.

Une troisième partie 7 du gaz chaud produit dans le refroidisseur à clinker 5 est refroidie dans un échangeur 14 et est recyclée pour alimenter le refroidisseur à clinker 5 en gaz de refroidissement.

Eventuellement, la chaleur résiduelle contenue dans la partie 8_{b} non recyclée des fumées du préchauffeur est utilisée pour la production d'énergie. Eventuellement, la partie 8_{b} de gaz riche en dioxyde de carbone, non directement recyclée, peut être également utilisée au moins partiellement comme fluide de transport pneumatique pour les combustibles solides et/ou de pulvérisation pour les combustibles liquides et/ou comme fluide de nettoyage pneumatique du préchauffeur à cyclones 3 et/ou du refroidisseur à clinker 5.

L'installation illustrée à la figure 3 est sensiblement similaire à celle de la figure 2, et se distingue en ce que l'échangeur 15 placé sur le courant de la partie 8ₐ des gaz recyclés est constitué par une unité de broyage et de séchage des matières crues.

Dans les installations des figures 1, 2 et 3, le gaz riche en oxygène 9 ou 10 peut être d'une teneur en azote inférieure à 5 %.

L'invention concerne aussi une installation pour la fabrication de clinker de ciment en tant que telle.

Cette installation comprend :
- un préchauffeur à cyclones 3 destiné à préchauffer la matière crue 2,
- un réacteur de précalcination 4, muni d'un ou plusieurs brûleurs, qui apporte de la chaleur au préchauffeur à cyclones 3,
- un four rotatif 1, muni d'un brûleur alimenté en combustible, les fumées du four étant conduites vers le réacteur de précalcination 4, voire ledit préchauffeur 3,
- un refroidisseur à clinker 5 par soufflage d'un gaz de refroidissement, au niveau de la sortie dudit four rotatif 1, engendrant du gaz chaud.

Selon l'invention, l'installation comprend, en outre, au moins :
- une source d'un gaz 9 riche en oxygène dont la teneur en azote est inférieure à 30 %, alimentant le réacteur de précalcination 4,
- une conduite 80 ; 81 ; 82 pour le recyclage d'une partie 8ₐ des gaz 8 sortant dudit préchauffeur à cyclones 3 dans l'installation. Il pourra notamment s'agir des installations précédemment décrites et illustrées aux figures 1, 2 et 3, permettant la mise en œuvre du procédé conforme à l'invention.

Selon un mode de réalisation au moins un échangeur 11 coopère avec une partie 6 du gaz chaud engendré par le refroidisseur à clinker 5 pour réchauffer la partie 8ₐ des gaz recyclés, la conduite 80 de recyclage alimentant directement le réacteur de précalcination 4, voire le préchauffeur à cyclones 3.

Selon un autre mode de réalisation notamment illustré aux figures 2 ou 3 :
- une source d'un gaz, riche en oxygène, dont la teneur en oxygène est inférieure à 30 % alimente le brûleur du four rotatif 1,
- au moins un échangeur 13; 15 coopère avec la partie 8ₐ des gaz recyclés pour la refroidir, ladite conduite de recyclage 81 ; 82 alimentant en gaz de refroidissement ledit refroidisseur à clinker 5.

Selon ce mode de réalisation, un échangeur 14 permet de refroidir une partie 7 du gaz chaud engendré par le refroidisseur à clinker permettant de le recycler et d'alimenter ledit refroidisseur à clinker 5 en gaz de refroidissement.

Nous décrivons maintenant les performances d'une installation de l'état de l'art puis celles escomptées avec l'installation précédemment décrite et illustrée à la figure 1, et enfin, celles de l'installation précédemment décrite et illustrée à la figure 2.

### Etat de l'art :

L'installation considérée est une unité de production de clinker de taille moyenne, représentative de la capacité d'un grand nombre d'unités existantes, et qui produit 5.000 tonnes par jour de clinker à partir d'un débit de matières crues de 337 tonnes par heure, sans mettre en œuvre l'invention.

Elle consomme 3.000 MJ/tonne de clinker produit, apportés sous forme de combustible dont 62,8 % sont introduits au niveau du réacteur de précalcination. On considère le cas où le combustible est du coke de pétrole, ayant un pouvoir calorifique inférieur de 34.300 kJ/kg et une teneur en azote de 2 %.

Le refroidisseur à clinker produit entre autres 117.000 Nm³/h d'air tertiaire à 890 °C, qui alimentent la combustion du réacteur de précalcination, et 210.000 Nm³/h d'air d'exhaure à 245 °C (air excédentaire). Les fumées du préchauffeur à cyclones ont un débit de 286.200 Nm³/h et une température de 320 °C. Le rapport de débits massiques entre la matière alimentée et les fumées du préchauffeur est 0,82.

La composition des fumées produites et sortant du préchauffeur est :
- oxygène : 3,6 %
- eau : 7,1 %
- dioxyde de carbone : 29,6 %
- azote : 59,7 %.

Les fumées du four rotatif ont un débit de 86.200 Nm³/h et une température de 1.160 °C. Elles sont utilisées dans le préchauffeur à cyclones. La composition des fumées produites dans le four est :
- oxygène : 3,2 %
- eau : 5,9 %
- dioxyde de carbone : 21,5 %
- azote : 69,4 %.

Dans ces conditions, 78,1 % de la quantité totale de dioxyde de carbone sont générés dans le préchauffeur et seulement 21,9 % dans le four rotatif.

### Exemple 1 selon l'invention :

L'installation considérée est comparable à celle de l'état de l'art, mais cette fois on met en œuvre la concentration de dioxyde de carbone selon l'invention et l'exemple illustré à la figure 1.

On apporte sous forme de combustible dans le réacteur de précalcination 1.972 MJ/t de clinker produit. Le fonctionnement du four n'étant pas modifié, avec une consommation de 1.117 MJ/t de clinker. Les besoins en oxygène pour la combustion au précalcinateur sont de 27.650 Nm³/h.

Ainsi, on produit en sortie du préchauffeur 274.100 Nm³/h de fumées à 325 °C dont 104.200 Nm³/h sont recyclées et 169.900 Nm³/h sont extraites pour en traiter le CO2. Le rapport de débits massiques entre la matière alimentée et les fumées du préchauffeur est de 0,79.

La composition de ces fumées produites et sortant du préchauffeur est :
- oxygène : 4,2 %
- eau : 10,7 %
- dioxyde de carbone : 49,8 %
- azote : 35,3 %
- CO2 sur fumées sèches : 55,8 %.

On prélève du refroidisseur 117.000 Nm³/h d'air tertiaire à 890 °C qui sont conduits à travers un échangeur et transfèrent leur énergie aux fumées recyclées du préchauffeur, l'air tertiaire se refroidissant jusqu'à 350 °C. Lesdites fumées du préchauffeur sont ainsi portées à la température de 810 °C avant d'être introduites dans le réacteur de précalcination.

### Exemple 2 selon l'invention :

L'installation considérée est celle de l'exemple illustré à la figure 2.

L'unité de production de clinker consomme sous forme de combustible 3.000 MJ/t de clinker produit, dont 62,8 % sont introduits au niveau du réacteur de précalcination. Les besoins en oxygène pour la combustion sont assurés par de l'oxygène pur, à la fois au réacteur de précalcination et au four. Les besoins totaux en oxygène sont de 42.060 Nm³/h.

Ainsi, on produit en sortie du préchauffeur 238.600 Nm³/h de fumées à 320 °C dont 129.600 Nm³/h sont recyclées et 109.000 Nm³/h sont extraites pour en traiter le CO2. Le rapport de débits massiques entre la matière alimentée et les fumées du préchauffeur est 0,81.

La composition de ces fumées produites et sortant du préchauffeur est :
- oxygène : 6,5 %
- eau : 15,6 %
- dioxyde de carbone : 77,7 %
- azote : 0,22 %
- CO2 sur fumées sèches : 92,0 %.

Les fumées extraites correspondent à un débit de 166,36 t/h de dioxyde de carbone.

Les fumées recyclées sont conduites dans un ensemble d'échangeurs pour être refroidies jusqu'à 135 °C, avant d'être utilisées pour le soufflage dans le refroidisseur de clinker. Des gaz excédentaires du refroidisseur, dits flux d'exhaure sont également refroidis jusqu'à 135 °C avant d'être eux-mêmes renvoyés vers le refroidisseur à clinker.

Ainsi, on souffle à travers le refroidisseur un débit de gaz de 275.800 Nm³/h à 135 °C. Le gaz s'échauffe au contact de la matière et on distingue trois parts, une part de 48.100 Nm³/h à 1.180 °C, dite flux secondaire, qui est dirigée vers la zone de combustion du four, une part de 81.500 Nm³/h à 890 °C, dite flux tertiaire, dirigée séparément vers le réacteur de précalcination, et enfin une part de 146.200 Nm³/h à 370 °C, dite flux d'exhaure ou flux excédentaire. Le débit de gaz recyclé dans le four et le préchauffeur, soit la somme des deux premiers flux, est 129.600 Nm³/h. Le clinker est refroidi jusqu'à une température de 205 °C.

Naturellement, d'autres modes de mise en œuvre auraient pu être envisagés par l'homme du métier sans pour autant sortir du cadre de l'invention définie par les revendications ci-après.

## Revendications

1. Procédé de fabrication de clinker de ciment dans une installation comprenant :
- un préchauffeur à cyclones (3) destiné à préchauffer la matière crue (2),
- un réacteur de précalcination (4), muni d'un ou plusieurs brûleurs, qui apporte de la chaleur au préchauffeur à cyclones (3),
- un four rotatif (1), muni d'un brûleur alimenté en combustible, les fumées dudit four (1) étant conduites vers le réacteur de précalcination (4), et/ou le préchauffeur à cyclones (3),
- un refroidisseur à clinker (5) par soufflage d'un gaz de refroidissement, au niveau de la sortie dudit four rotatif (1), engendrant du gaz chaud,
procédé dans lequel :
- on préchauffe les matières crues et on les décarbonate dans ledit préchauffeur à cyclones (3,), et/ou ledit réacteur de précalcination (4),
- on refroidit le clinker sortant du four (1) dans ledit refroidisseur à clinker (5),
- on alimente le réacteur de précalcination (4) avec un gaz (9) riche en oxygène dont la teneur en azote est inférieure à 30%, constituant la seule source d'oxygène dudit réacteur (4),
- on recycle une partie (8a) des gaz sortant dudit préchauffeur à cyclones (3) dans l'installation vers le réacteur de précalcination (4), voire le préchauffeur à cyclones (3), de manière à obtenir un flux adéquat nécessaire à la suspension des matières dans ledit préchauffeur, tandis que l'autre partie (8b), riche en dioxyde de carbone est adaptée en vue d'un traitement permettant de limiter les rejets en dioxyde de carbone dans l'atmosphère, tel que notamment la séquestration
et dans lequel on recycle la partie (8a) des gaz (8) sortant dudit préchauffeur à cyclones (3) et on la réchauffe grâce à une partie (6) du gaz chaud engendré par le refroidisseur à clinker (5), avant de la diriger directement vers le réacteur de précalcination (4), voire le préchauffeur à cyclones (3)
et dans lequel le gaz de refroidissement du refroidisseur à clinker (5) est de l'air et on divise l'air chaud engendré par le refroidisseur à clinker (5) en trois flux :
- on dirige une partie (60) de l'air chaud produit dans le refroidisseur, dite flux secondaire, vers le four rotatif (1) pour être utilisée comme air de combustion dans le four,
- on conduit, une seconde partie (6) de gaz chauds produits dans le refroidisseur à clinker, dite flux tertiaire, séparément de la première partie (60), définie par une température au moins égale à 750 °C, jusqu'à un échangeur (11) de manière à réchauffer la partie (8ₐ) des gaz recyclés,
- on extrait une troisième partie (7), de température inférieure à la température du flux tertiaire.

2. Procédé selon la revendication 1, dans lequel on recycle ladite partie (8a) des gaz (8) sortant dudit préchauffeur à cyclones (3) de manière à assurer un rapport de débits massiques entre la matière traitée et les fumées compris entre 0,5 kg/kg et 2 kg/kg.

3. Procédé selon la revendication 1 ou 2, dans lequel ledit gaz riche en oxygène (9 et/ou 10) a une teneur en azote inférieure à 5%.

4. Procédé selon l'une des revendications 1 à 3, dans lequel on utilise la chaleur résiduelle contenue dans la partie (8_{b}) non recyclée des fumées du préchauffeur pour la production d'énergie.

5. Procédé selon l'une des revendications 1 à 4, dans lequel ladite partie (8b) de gaz riche en dioxyde de carbone est utilisée comme fluide de transport pneumatique pour les combustibles solides et/ou de pulvérisation pour les combustibles liquides, et/ou comme fluide de nettoyage pneumatique du préchauffeur à cyclones (3) et/ou du refroidisseur à clinker.

6. Installation pour la fabrication de clinker de ciment comprenant :
- un préchauffeur à cyclones (3) destiné à préchauffer la matière crue (2),
- un réacteur de précalcination (4), muni d'un ou plusieurs brûleurs qui apporte de la chaleur au préchauffeur à cyclones (3),
- un four rotatif (1), muni d'un brûleur alimenté en combustible, les fumées dudit four (1) étant conduites vers le réacteur de précalcination (4), voire ledit préchauffeur,
- un refroidisseur à clinker (5) par soufflage d'un gaz de refroidissement, au niveau de la sortie dudit four rotatif (1), engendrant du gaz chaud,
- une source d'un gaz (9) riche en oxygène dont la teneur en azote est inférieure à 30%, alimentant le réacteur de précalcination (4),
- une conduite (80 ; 81 ; 82) pour le recyclage d'une partie (8ₐ) des gaz sortant dudit préchauffeur à cyclones (3, 3ₐ) dans l'installation, vers le réacteur de précalcination, voire le préchauffeur à cyclones
et, dans laquelle au moins un échangeur (11) coopère avec une partie (6) de l'air chaud engendré par le refroidisseur à clinker (5) pour réchauffer la partie (8ₐ) des gaz recyclés, la conduite (80) de recyclage alimentant directement le réacteur de précalcination (4), voire le préchauffeur à cyclones (3).

7. Procédé de fabrication de clinker de ciment dans une installation comprenant :
- un préchauffeur à cyclones (3) destiné à préchauffer la matière crue (2),
- un réacteur de précalcination (4), muni d'un ou plusieurs brûleurs, qui apporte de la chaleur au préchauffeur à cyclones (3),
- un four rotatif (1), muni d'un brûleur alimenté en combustible, les fumées dudit four (1) étant conduites vers le réacteur de précalcination (4), et/ou le préchauffeur à cyclones (3),
- un refroidisseur à clinker (5) par soufflage d'un gaz de refroidissement, au niveau de la sortie dudit four rotatif (1), engendrant du gaz chaud,
procédé dans lequel :
- on préchauffe les matières crues et on les décarbonate dans ledit préchauffeur à cyclones (3,), et/ou ledit réacteur de précalcination (4),
- on refroidit le clinker sortant du four (1) dans ledit refroidisseur à clinker (5),
- on alimente le réacteur de précalcination (4) avec un gaz (9) riche en oxygène dont la teneur en azote est inférieure à 30%, constituant la seule source d'oxygène dudit réacteur (4),
- on alimente le brûleur du four rotatif avec un gaz (10) riche en oxygène dont la teneur en azote est inférieure à 30%, constituant la seule source d'oxygène du four
- on recycle une partie (8a) des gaz sortant dudit préchauffeur à cyclones (3) dans l'installation vers le refroidisseur à clinker (5), et on la refroidit grâce à au moins un échangeur (13,15) et on la dirige pour servir de gaz de refroidissement vers ledit refroidisseur à clinker (5) de manière à obtenir un flux adéquat nécessaire à la suspension des matières dans ledit préchauffeur, tandis que l'autre partie (8b), riche en dioxyde de carbone est adaptée en vue d'un traitement permettant de limiter les rejets en dioxyde de carbone dans l'atmosphère, tel que notamment la séquestration
et dans lequel on recycle une partie excédentaire (7) du gaz chaud produit par le refroidisseur à clinker (5), que l'on refroidit grâce à un échangeur (14) pour alimenter ledit refroidisseur à clinker (5) en gaz de refroidissement.

8. Procédé selon la revendication 7 dans lequel on recycle ladite partie (8a) des gaz (8) sortant dudit préchauffeur à cyclones (3) de manière à assurer un rapport de débits massiques entre la matière traitée et les fumées compris entre 0,5 kg/kg et 2 kg/kg.

9. Procédé selon la revendication 7 ou 8, dans lequel on utilise comme échangeur (15) pour refroidir la partie (8a) des gaz recyclés une unité de séchage de matières crues.

10. Procédé selon l'une des revendications 7 à 9 dans lequel ledit gaz riche en oxygène (9 et/ou 10) a une teneur en azote inférieure à 5%.

11. Procédé selon l'une des revendications 7 à 10, dans lequel on utilise la chaleur résiduelle contenue dans la partie (8_{b}) non recyclée des fumées du préchauffeur pour la production d'énergie.

12. Procédé selon l'une des revendications 7 à 11, dans lequel ladite partie (8b) de gaz riche en dioxyde de carbone est utilisée comme fluide de transport pneumatique pour les combustibles solides et/ou de pulvérisation pour les combustibles liquides, et/ou comme fluide de nettoyage pneumatique du préchauffeur à cyclones (3) et/ou du refroidisseur à clinker.

13. Installation pour la fabrication de clinker de ciment comprenant :
- un préchauffeur à cyclones (3) destiné à préchauffer la matière crue (2),
- un réacteur de précalcination (4), muni d'un ou plusieurs brûleurs qui apporte de la chaleur au préchauffeur à cyclones (3),
- un four rotatif (1), muni d'un brûleur alimenté en combustible, les fumées dudit four (1) étant conduites vers le réacteur de précalcination (4), voire ledit préchauffeur,
- un refroidisseur à clinker (5) par soufflage d'un gaz de refroidissement, au niveau de la sortie dudit four rotatif (1), engendrant du gaz chaud,
- une source d'un gaz (9) riche en oxygène dont la teneur en azote est inférieure à 30%, alimentant le réacteur de précalcination (4),
- une source d'un gaz riche en oxygène, dont la teneur en azote inférieure à 30% alimente le brûleur du four rotatif (1)
- une conduite (80 ; 81 ; 82) pour le recyclage d'une partie (8ₐ) des gaz sortant dudit préchauffeur à cyclones (3, 3ₐ) dans l'installation vers ledit refroidisseur à clinker et dans laquelle au moins un échangeur (13 ; 15) coopère avec la partie (8ₐ) des gaz recyclés pour la refroidir, ladite conduite de recyclage (81 ; 82) alimentant en gaz de refroidissement ledit refroidisseur à clinker (5) et dans laquelle un échangeur (14) permet de refroidir une partie (7) du gaz chaud engendré par le refroidisseur à clinker (5) afin d'alimenter ledit refroidisseur à clinker (5) en gaz de refroidissement.

## Patentansprüche

1. Verfahren zur Herstellung von Zementklinker in einer Anlage, umfassend:
- einen Zyklonvorwärmer (3), der dazu bestimmt ist, das Rohmaterial (2) vorzuwärmen,
- einen Vorkalzinierungsreaktor (4), der mit einem oder mehreren Brennern versehen ist, die dem Zyklonvorwärmer (3) Wärme zuführen,
- einen Drehofen (1), der mit einem mit Brennstoff versorgten Brenner versehen ist, wobei die Rauchgase des Ofens (1) zu dem Vorkalzinierungsofen (4) und/oder dem Zyklonvorwärmer (3) geleitet werden,
- einen Klinkerkühler (5) durch Einblasen von Kühlgas im Bereich des Ausgangs des Drehofens (1), wodurch Heißgas erzeugt wird,
wobei bei dem Verfahren:
- die Rohstoffe vorgewärmt und in dem Zyklonvorwärmer (3) und/oder dem Vorkalzinierungsreaktor (4) entkarbonisiert werden,
- der aus dem Ofen (1) austretende Klinker in dem Klinkerkühler (5) gekühlt wird,
- der Vorkalzinierungsreaktor (4) mit einem an Sauerstoff reichen Gas (9), dessen Stickstoffgehalt unter 30 % liegt, versorgt wird, welches die einzige Sauerstoffquelle des Reaktors (4) darstellt,
- ein Teil (8a) der aus dem Zyklonvorwärmer (3) in die Anlage austretenden Gase zum Vorkalzinierungsreaktor (4) bzw. Zyklonvorwärmer (3) recycelt wird, um einen entsprechenden Strom zu erhalten, der für die Suspension der Stoffe im Vorwärmer notwendig ist, während der andere, an Kohlendioxid reiche Teil (8b) für eine Behandlung, die es ermöglicht, die Kohlendioxid-Ausstöße in die Atmosphäre zu begrenzen, insbesondere die Sequestrierung, angepasst wird,
und bei dem der Teil (8a) der aus dem Zyklonvorwärmer (3) austretenden Gase (8) recycelt und durch einen Teil (6) des vom Klinkerkühler (5) erzeugten Heißgases erwärmt wird, bevor er direkt zum Vorkalzinierungsreaktor (4) bzw. Zyklonvorwärmer (3) geleitet wird,
und bei dem das Kühlgas des Klinkerkühlers (5) Luft ist, und die vom Klinkerkühler (5) erzeugte heiße Luft in drei Ströme geteilt wird:
- einen Teil (60) der im Kühler erzeugten heißen Luft, Sekundärstrom genannt, der zum Drehofen (1) geleitet wird, um als Verbrennungsluft im Ofen verwendet zu werden,
- einen zweiten Teil (6) von im Klinkerkühler erzeugten heißen Gasen, Tertiärstrom genannt, der getrennt vom ersten Teil (60), der durch eine Temperatur mindestens gleich 750 °C definiert ist, zu einem Wärmetauscher (11) geleitet wird, um den Teil (8a) der recycelten Gase zu erwärmen,
- einen dritten Teil (7) mit einer Temperatur unter der Temperatur des Tertiärstroms, der entnommen wird.

2. Verfahren nach Anspruch 1, bei dem der Teil (8a) der aus dem Zyklonvorwärmer (3) austretenden Gase (8) recycelt wird, um ein Massenstromverhältnis zwischen dem behandelten Material und den Rauchgasen zwischen 0,5 kg/kg und 2 kg/kg zu gewährleisten.

3. Verfahren nach Anspruch 1 oder 2, bei dem das an Sauerstoff reiche Gas (9 und/oder 10) einen Stickstoffgehalt unter 5 % hat.

4. Verfahren nach einem der Ansprüche 1 bis 3, bei dem die in dem nicht recycelten Teil (8b) der Rauchgase des Vorwärmers enthaltene Restwärme für die Energieerzeugung verwendet wird.

5. Verfahren nach einem der Ansprüche 1 bis 4, bei dem der an Kohlendioxid reiche Teil Gasteil (8b) als pneumatisches Transportfluid für die festen Brennstoffe und/oder zur Zerstäubung für die flüssigen Brennstoffe und als pneumatisches Reinigungsfluid des Zyklonvorwärmers (3) und/oder des Klinkerkühlers verwendet wird.

6. Anlage zur Herstellung von Zementklinker, umfassend:
- einen Zyklonvorwärmer (3), der dazu bestimmt ist, das Rohmaterial (2) vorzuwärmen,
- einen Vorkalzinierungsreaktor (4), der mit einem oder mehreren Brennern versehen ist, die dem Zyklonvorwärmer (3) Wärme zuführen,
- einen Drehofen (1), der mit einem mit Brennstoff versorgten Brenner versehen ist, wobei die Rauchgase des Ofens (1) zu dem Vorkalzinierungsofen (4) und/oder dem Zyklonvorwärmer (3) geleitet werden,
- einen Klinkerkühler (5) durch Einblasen von Kühlgas im Bereich des Ausgangs des Drehofens (1), wodurch Heißgas erzeugt wird,
- eine Quelle eines an Sauerstoff reichen Gases (9), dessen Stickstoffgehalt niedriger als 30 % ist, die den Vorkalzinierungsreaktor (4) versorgt,
- eine Leitung (80; 81; 82) zum Recycling eines Teils (8a) der aus dem Zyklonvorwärmer (3, 3a) in die Anlage austretenden Gase zum Vorkalzinierungsreaktor bzw. Zyklonvorwärmer,
und in der mindestens ein Wärmetauscher (11) mit einem Teil (6) der vom Klinkerkühler (5) erzeugten Heißluft zusammenwirkt, um den Teil (8a) der recycelten Gase zu erwärmen, wobei die Recycling-Leitung (80) direkt den Vorkalzinierungsreaktor (4) bzw. den Zyklonvorwärmer (3) versorgt.

7. Verfahren zur Herstellung von Zementklinker in einer Anlage, umfassend:
- einen Zyklonvorwärmer (3), der dazu bestimmt ist, das Rohmaterial (2) vorzuwärmen,
- einen Vorkalzinierungsreaktor (4), der mit einem oder mehreren Brennern versehen ist, die dem Zyklonvorwärmer (3) Wärme zuführen,
- einen Drehofen (1), der mit einem mit Brennstoff versorgten Brenner versehen ist, wobei die Rauchgase des Ofens (1) zu dem Vorkalzinierungsofen (4) und/oder dem Zyklonvorwärmer (3) geleitet werden,
- einen Klinkerkühler (5) durch Einblasen von Kühlgas im Bereich des Ausgangs des Drehofens (1), wodurch Heißgas erzeugt wird,
wobei bei dem Verfahren:
- die Rohstoffe vorgewärmt und in dem Zyklonvorwärmer (3) und/oder dem Vorkalzinierungsreaktor (4) entkarbonisiert werden,
- der aus dem Ofen (1) austretende Klinker in dem Klinkerkühler (5) gekühlt wird,
- der Vorkalzinierungsreaktor (4) mit einem an Sauerstoff reichen Gas (9), dessen Stickstoffgehalt unter 30 % liegt, versorgt wird, welches die einzige Sauerstoffquelle des Reaktors (4) darstellt,
- der Brenner des Drehofens mit einem an Sauerstoff reichen Gas (10), dessen Stickstoffgehalt unter 30 % liegt, versorgt wird, welches die einzige Sauerstoffquelle des Ofens darstellt,
- ein Teil (8a) der aus dem Zyklonvorwärmer (3) in die Anlage austretenden Gase zum Klinkerkühler (5) recycelt und durch mindestens einen Wärmetauscher (13, 15) gekühlt und gelenkt wird, um als Kühlgas zum Klinkerkühler (5) zu dienen, um einen entsprechenden Strom zu erhalten, der für die Suspension der Stoffe im Vorwärmer notwendig ist, während der andere, an Kohlendioxid reiche Teil (8b) für eine Behandlung, die es ermöglicht, die Kohlendioxid-Ausstöße in die Atmosphäre zu begrenzen, insbesondere die Sequestrierung, angepasst wird,
und bei dem ein überschüssiger Teil (7) des von dem Klinkerkühler (5) erzeugten heißen Gases recycelt wird, durch einen Wärmetauscher (14) gekühlt wird, um den Klinkerkühler (5) mit Kühlgas zu versorgen.

8. Verfahren nach Anspruch 7, bei dem der Teil (8a) der aus dem Zyklonvorwärmer (3) austretenden Gase (8) recycelt wird, um ein Massenstromverhältnis zwischen dem behandelten Material und den Rauchgasen zwischen 0,5 kg/kg und 2 kg/kg zu gewährleisten.

9. Verfahren nach Anspruch 7 oder 8, bei dem als Wärmetauscher (15) zum Kühlen des Teils (8a) der recycelten Gase eine Rohstoff-Trocknungseinheit verwendet wird.

10. Verfahren nach einem der Ansprüche 7 bis 9, bei dem das an Sauerstoff reiche Gas (9 und/oder 10) einen Strickstoffgehalt unter 5 % hat.

11. Verfahren nach einem der Ansprüche 7 bis 10, bei dem die in dem nicht recycelten Teil (8b) der Rauchgase des Vorwärmers enthaltene Restwärme für die Energieproduktion verwendet wird.

12. Verfahren nach einem der Ansprüche 7 bis 11, bei dem der an Kohlendioxid reiche Teil Gasteil (8b) als pneumatisches Transportfluid für die festen Brennstoffe und/oder zur Zerstäubung für die flüssigen Brennstoffe und als pneumatisches Reinigungsfluid des Zyklonvorwärmers (3) und/oder des Klinkerkühlers verwendet wird.

13. Anlage zur Herstellung von Zementklinker, umfassend:
- einen Zyklonvorwärmer (3), der dazu bestimmt ist, das Rohmaterial (2) vorzuwärmen,
- einen Vorkalzinierungsreaktor (4), der mit einem oder mehreren Brennern versehen ist, die dem Zyklonvorwärmer (3) Wärme zuführen,
- einen Drehofen (1), der mit einem mit Brennstoff versorgten Brenner versehen ist, wobei die Rauchgase des Ofens (1) zu dem Vorkalzinierungsofen (4) bzw. dem Vorwärmer geleitet werden,
- einen Klinkerkühler (5) durch Einblasen von Kühlgas im Bereich des Ausgangs des Drehofens (1), wodurch Heißgas erzeugt wird,
- eine Quelle eines an Sauerstoff reichen Gases (9), dessen Stickstoffgehalt niedriger als 30 % ist, die den Vorkalzinierungsreaktor (4) versorgt,
- eine Quelle eines an Sauerstoff reichen Gases, dessen Stickstoffgehalt niedriger als 30 % ist, die den Brenner des Drehofens (1) versorgt,
- eine Leitung (80; 81; 82) zum Recycling eines Teils (8a) der aus dem Zyklonvorwärmer (3, 3a) in die Anlage austretenden Gase zum Klinkerkühler,
und wobei mindestens ein Wärmetauscher (13; 15) mit dem Teil (8a) der recycelten Gase zusammenwirkt, um ihn zu kühlen, wobei die Recycling-Leitung (81; 82) den Klinkerkühler (5) mit Kühlgas versorgt, und wobei es ein Wärmetauscher (14) ermöglicht, einen Teil (7) des vom Klinkerkühler (5) erzeugten Heißgases zu kühlen, um den Klinkerkühler (5) mit Kühlgas zu versorgen.

## Claims

1. A process for manufacturing cement clinker in a plant comprising:
- a cyclone preheater (3) intended to preheat the raw material (2),
- a precalcination reactor (4), fitted with one or more burners, which provides heat to the cyclone preheater (3),
- a rotary furnace (1), equipped with a burner supplied with fuel, the flue gases from said furnace (1) being conducted to the precalcination reactor (4), and/or to the cyclone preheater (3),
- a clinker cooler (5) by blowing a cooling gas, at the outlet of said rotary furnace (1), generating hot gas,
process wherein:
- the raw materials are preheated and decarbonated in said cyclone preheater (3), and/or said precalcination reactor (4),
- the clinker leaving the furnace (1) is cooled in said clinker cooler (5),
- the precalcination reactor (4) is fed with an oxygen-rich gas (9), the nitrogen content of which is less than 30%, constituting the sole oxygen source for said reactor (4),
- a portion (8a) of the gases leaving said cyclone preheater (3) in the plant is recycled into the precalcination reactor (4), or even into the cyclone preheater (3), so as to obtain a suitable flux necessary for suspending matter in said preheater, while the other carbon dioxide-rich portion (8b), is adapted for the purpose of a treatment for limiting the amount of carbon dioxide discharged into the atmosphere, such as particularly sequestration
and wherein the portion (8a) of the gases (8) leaving said cyclone preheater (3) is recycled and heated by means of a portion (6) of the hot gas generated by the clinker cooler (5), before directly directing it to the precalcination reactor (4), or even to the cyclone preheater (3)
and wherein the cooling gas of the clinker cooler (5) is air and the hot air generated by the clinker cooler (5) is divided into three fluxes:
- a portion (60) of the hot air produced in the cooler, called secondary flux, is directed to the rotary furnace (1) to be used as combustion air in the furnace,
- a second portion (6) of hot gases produced in the clinker cooler, called tertiary flux, separately from the first portion (60), defined by a temperature at least equal to 750 °C, is conducted to an exchanger (11) so as to heat the portion (8ₐ) of the recycled gases,
- a third portion (7), having a temperature less than the temperature of the tertiary flux is extracted.

2. The process according to claim 1, wherein said portion (8a) of the gases (8) leaving said cyclone preheater (3) is recycled so as to ensure a mass flow rate ratio between the material treated and the flue gases comprised between 0.5 kg/kg and 2 kg/kg.

3. The process according to claim 1 or 2, wherein said oxygen-rich gas (9 and/or 10) has a nitrogen content less than 5%.

4. The process according to one of claims 1 to 3, wherein the residual heat contained in the non-recycled portion (8_{b}) of the flue gas of the preheater is used for the production of energy.

5. The process according to one of claims 1 to 4, wherein said carbon dioxide-rich gas portion (8b) is used as a pneumatic transport fluid for solid fuels and/or spray for liquid fuels, and/or as a pneumatic cleaning fluid for the cyclone preheater (3) and/or the clinker cooler.

6. A cement clinker manufacturing plant comprising:
- a cyclone preheater (3) intended to preheat the raw material (2),
- a precalcination reactor (4), fitted with one or more burners which provides heat to the cyclone preheater (3),
- a rotary furnace (1), equipped with a burner supplied with fuel, the flue gases from said furnace (1) being conducted to the precalcination reactor (4), or even to said preheater,
- a clinker cooler (5) by blowing a cooling gas, at the outlet of said rotary furnace (1), generating hot gas,
- a source of an oxygen-rich gas (9) the nitrogen content of which is less than 30%, feeding the precalcination reactor (4),
- a pipe (80; 81; 82) for recycling a portion (8a) of the gases leaving said cyclone preheater (3, 3ₐ) in the plant, into the precalcination reactor, or even into the cyclone preheater
and, wherein at least one exchanger (11) cooperates with a portion (6) of the hot air generated by the clinker cooler (5) to heat the portion (8a) of the recycled gases, the recycling pipe (80) directly feeding the precalcination reactor (4), or even the cyclone preheater (3).

7. The process for manufacturing cement clinker in a plant comprising:
- a cyclone preheater (3) intended to preheat the raw material (2),
- a precalcination reactor (4), fitted with one or more burners, which provides heat to the cyclone preheater (3),
- a rotary furnace (1), equipped with a burner supplied with fuel, the flue gases from said furnace (1) being conducted to the precalcination reactor (4), and/or to the cyclone preheater (3),
- a clinker cooler (5) by blowing a cooling gas, at the outlet of said rotary furnace (1), generating hot gas,
process wherein:
- the raw materials are preheated and decarbonated in said cyclone preheater (3), and/or said precalcination reactor (4),
- the clinker leaving the furnace (1) is cooled in said clinker cooler (5),
- the precalcination reactor (4) is fed with an oxygen-rich gas (9), the nitrogen content of which is less than 30%, constituting the sole oxygen source for said reactor (4),
- the burner of the rotary furnace is fed with an oxygen-rich gas (10), the nitrogen content of which is less than 30%, constituting the sole oxygen source for the furnace
- a portion (8a) of the gases leaving said cyclone preheater (3) in the plant is recycled into the clinker cooler (5), and it is cooled by means of at least one exchanger (13, 15) and it is directed to serve as cooling gas to said clinker cooler (5) so as to obtain a suitable flux necessary for suspending matter in said preheater, while the other carbon dioxide-rich portion (8b), is adapted for the purpose of a treatment for limiting the amount of carbon dioxide discharged into the atmosphere, such as particularly sequestration
and wherein a surplus portion (7) of the hot gas produced by the clinker cooler (5) is recycled, said surplus portion is cooled by means of an exchanger (14) to feed cooling gas to said clinker cooler (5).

8. The process according to claim 7 wherein said portion (8a) of the gases (8) leaving said cyclone preheater (3) is recycled so as to ensure a mass flow rate ratio between the material treated and the flue gases comprised between 0.5 kg/kg and 2 kg/kg.

9. The process according to claim 7 or 8, wherein a raw material drying unit is used as exchanger (15) to cool the portion (8ₐ) of the recycled gases.

10. The process according to one of claims 7 to 9 wherein said oxygen-rich gas (9 and/or 10) has a nitrogen content less than 5%.

11. The process according to one of claims 7 to 10, wherein the residual heat contained in the non-recycled portion (8_{b}) of the flue gas of the preheater is used for the production of energy.

12. The process according to one of claims 7 to 11, wherein said carbon dioxide-rich gas portion (8b) is used as a pneumatic transport fluid for solid fuels and/or spray for liquid fuels, and/or as a pneumatic cleaning fluid for the cyclone preheater (3) and/or the clinker cooler.

13. The cement clinker manufacturing plant comprising:
- a cyclone preheater (3) intended to preheat the raw material (2),
- a precalcination reactor (4), fitted with one or more burners which provides heat to the cyclone preheater (3),
- a rotary furnace (1), equipped with a burner supplied with fuel, the flue gases from said furnace (1) being conducted to the precalcination reactor (4), or even to said preheater,
- a clinker cooler (5) by blowing a cooling gas, at the outlet of said rotary furnace (1), generating hot gas,
- a source of an oxygen-rich gas (9) the nitrogen content of which is less than 30%, feeding the precalcination reactor (4),
- a source of an oxygen-rich gas, the nitrogen content of which is less than 30%, feeds the burner of the rotary furnace (1),
- a pipe (80; 81; 82) for recycling a portion (8ₐ) of the gases leaving said cyclone preheater (3, 3ₐ) in the plant, into said clinker cooler and wherein at least one exchanger (13; 15) cooperates with the portion (8ₐ) of the recycled gases to cool it, said recycling pipe (81; 82) feeding cooling gas to said clinker cooler (5) and wherein an exchanger (14) allows to cool a portion (7) of the hot gas generated by the clinker cooler (5) in order to feed cooling gas to said clinker cooler (5).
